# EUROPEAN PATENT SPECIFICATION

(11) **EP 2 575 197 B1**
(45) Date of publication and mention of the grant of the patent: **23.03.2016**
(21) Application number: 12185881.5
(22) Date of filing: 25.09.2012
(51) Int. Cl.: H01M 4/36, H01M 4/58, H01M 4/525

(54) **Non-aqueous electrolyte secondary battery**
Sekundär-Batterie mit nicht-wässrigem Elektrolyten
Batterie secondaire avec un électrolyte non-aqueux

(30) Priority: 30.09.2011 JP 2011216071
(43) Date of publication of application: 03.04.2013
(73) Proprietor: Fuji Jukogyo Kabushiki Kaisha, Tokyo 150-8554 (JP)
(72) Inventor: Yanagita, Hideo, Tokyo 150-8554 (JP); Takimoto, Kazuki, Tokyo 150-8554 (JP)
(74) Representative: Sajda, Wolf E.

(56) References cited:
- WO-A1-98/12761
- JP-A- 2010 186 689
- KR-B1- 101 034 226
- US-A1- 2004 096 743
- US-A1- 2006 099 495
- US-A1- 2007 148 541
- US-A1- 2008 116 423
- US-A1- 2008 203 363
- US-A1- 2009 053 614
- US-A1- 2012 141 873
- US-B1- 6 203 946

## Description

### BACKGROUND OF THE INVENTION

### FIELD OF THE INVENTION

The present invention relates to a non-aqueous electrolyte secondary battery. The present invention relates to a non-aqueous electrolyte secondary battery including a polyanionic positive electrode material and lithium nickel composite oxide as positive electrode active materials.

### RELATED ART

Non-aqueous electrolyte secondary batteries such as lithium ion secondary batteries are currently used as power sources of electric appliance and the like, and furthermore, as power sources of electronic automobiles (such as EVs (electric vehicles), HEVs (hybrid electric vehicles) and the like). In addition, non-aqueous electrolyte secondary batteries such as lithium ion secondary batteries require further improvement in characteristics, such as improvement in energy density (realization of high capacity), improvement in power density (realization of high power) and improvement in cycle characteristics (improvement in cycle lifespan), high safety and the like.

Recently, most of lithium ion secondary batteries used for small-sized electric appliances and the like use lithium composite oxide such as LiCoO₂ as a positive electrode active material and realize electric storage devices with high capacity and long lifespan. However, these positive electrode active materials aggressively react with electrolytic solutions, generate heat while producing oxygen, and in the most serious cases, disadvantageously may cause combustion, in high temperature and high electric potential states when abnormal phenomena occur.

Recently, polyanionic positive electrode materials are researched as positive electrode active materials that exhibit superior thermal stability even in high temperature and high electric potential states. Among these positive electrode active materials, olivine-type Fe (LiMnPO₄), olivine-type Mn(LiMnPO₄) having similar crystalline structures and the like are researched and are partially practically applicable as electrically-driven tools. In addition, NASICON-type vanadium lithium phosphate such as Li₃V₂(PO₄)₃ attracts great attention as a similar positive electrode active material with superior thermal stability (for example, Patent Document 1: JP-A-2001-500 665).

However, polyanionic positive electrode materials should be surface-coated with conductive carbon due to low electrical conductivity. In this regard, coating conductive carbon on the surface of the active material causes problems such as increase in specific surface area and deterioration in cell characteristics due to moisture adsorption in the manufacturing environment.

In an attempt to solve these problems, Patent Document 2 (JP-A-2009-048 981) discloses a non-aqueous electrolyte secondary battery comprising a positive electrode using a compound represented by formula of LiₓFe_{1-y}M_{y}PO₄ (in which M is at least one selected from the group consisting of Co, Ni, Cu, Zn, Al, Sn, B, Ga, Cr, V, Ti, Mg, Ca and Sr; and 0.9 < x< 1.2; 2.0 ≤ y < 0.3) as a positive electrode active material, a negative electrode containing a lithium metal, a lithium alloy or a material capable of doping and dedoping lithium, and a non-aqueous electrolytic solution containing fluorinated ethylene carbonate.

That is, Patent Document 2 also discloses a method for reducing deterioration in cells caused by moisture, when a polyanionic active material coated with conductive carbon is used for a positive electrode.

As described above, when a polyanionic active material coated with conductive carbon is used for a positive electrode, a specific surface area increases and cell characteristics are deteriorated due to moisture adsorption in the manufacturing environment. Patent Document 2 discloses adsorption of moisture in a cell, inhibition of generation of hydrogen fluoride during reaction with LiPF₆ or the like in an electrolytic solution and inhibition of cell deterioration through incorporation of fluorinated ethylene carbonate (FEC) into a non-aqueous electrolytic solution.

However, Patent Document 2 does not suggest a solution of hydrogen fluoride generated by reaction of fluorinated ethylene carbonate with moisture, thus disadvantageously causing a deterioration of cell characteristics due to the small amount of hydrogen fluoride.

### SUMMARY OF THE INVENTION

The invention provides a non-aqueous electrolyte secondary battery comprising:- a first active material of a positive electrode including a chemical compound represented by a formula of LiFeP0₄, LiMnP0₄ or Li₃V₂(P0₄)₃ or a chemical compound in which a part of a site of Fe, Mn or V in the formula of LiFeP0₄, LiMnP0₄ or Li₃V₂(P0₄)₃ is substituted by a different metallic element having an atomic number of 11 or more, wherein the chemical compound is coated with a conductive carbon;- a second active material of the positive electrode including lithium nickel composite oxide; and- an electrolytic solution including fluorinated ethylene carbonate, wherein the amount of nickel contained in the second active material is 0.3 to 0.8 mol with respect to one mol of a Li atom, and wherein the content of the fluorinated ethylene carbonate in the electrolytic solution is 0.2 % by mass to 10 % by mass, in which deterioration in properties caused by hydrogen fluoride generated by reaction of fluorinated ethylene carbonate with moisture is inhibited.

### BRIEF DESCRIPTION OF THE DRAWINGS

- FIG. 1: is a schematic sectional view illustrating a non-aqueous electrolyte secondary battery (lithium ion secondary battery) according to one exemplary embodiment.
- FIG. 2: is a schematic sectional view illustrating a non-aqueous electrolyte secondary battery (lithium ion secondary battery)
according to another exemplary embodiment.

### DETAILED DESCRIPTION OF THE EMBODIMENTS

Hereinafter, embodiments of the present invention will be described in detail. The embodiments relate to a non-aqueous electrolyte secondary battery. Examples of the non-aqueous electrolyte secondary battery include lithium ion secondary batteries. As described below, the present invention is particularly not limited to other components except for the positive electrode in the non-aqueous electrolyte secondary battery and may be performed by suitably combining conventional techniques known in the art so long as the effects of the present invention are not impaired.

The non-aqueous electrolyte secondary battery according to one embodiment includes a positive electrode including a positive electrode mixture layer containing a positive electrode active material. The positive electrode active material includes a first active material in which LiFePO₄, LiMnPO₄ or Li₃V₂(PO₄)₃ is coated with a carbon as polyanionic positive electrode material and a second active material of lithium nickel composite oxide.

### LiFePO₄, LiMₙPO₄ or Li₃V₂(PO₄)₃

In the embodiments, LiFePO₄, LiMnPO₄ or Li₃V₂(PO₄)₃ may be prepared by any method without particular limitation. For example, Li₃V₂(PO₄)₃ may be prepared by a method including mixing a lithium source such as LiOH, or LiOH·H₂O, a vanadium source such as V₂O₅ or V₂O₃ and a phosphate source such as NH₄H₂PO₄ or (NH₄)₂HPO₄, followed by reacting and baking and the like. Li₃V₂(PO₄)₃ may be in the form of a particle conventionally obtained by grinding the baked substance or the like.

In addition, LiFePO₄ and LiMnPO₄ may be for example prepared by mixing a lithium source such as lithium oxide, lithium carbonate or lithium hydroxide, a phosphorous source such as ammonium phosphate, ammonium hydrogen phosphate, or ammonium dihydrogen phosphate, a Fe source or a Mn source containing a Fe element or a Mn element such as oxalate, acetate, oxide, hydoxide, carbonate, sulfate or nitrate, followed by reacting, and baking and the like.

Furthermore, phosphate lithium which is a compound serving as both a lithium source and a phosphorous source, or phosphate which is a compound serving as both a phosphorous source and a Fe source, or serving as both a phosphorous source and a Mn source may be used as a raw material. LiFePO₄, LiMnPO₄ or Li₃V₂(PO₄)₃ may be in the form of a particle obtained by grinding the baked substance or the like.

LiFePO₄, LiMnPO₄ or Li₃V₂(PO₄)₃ should be surface-coated with conductive carbon due to original low electrical conductivity. Accordingly, electrical conductivity of LiFePO₄, LiMnPO₄ or Li₃V₂(PO₄)₃ can be improved. The coating amount of conductive carbon is preferably 0.1 to 20 % by mass in terms of C atom.

The conductive carbon coating may be performed by a well-known method. For example, the conductive carbon coating can be formed on the surface of LiFePO₄, LiMnPO₄ or Li₃V₂(PO₄)₃ by mixing conductive carbon with citric acid, ascorbic acid, polyethylene glycol, sucrose, methanol, propene, carbon black, Ketjen black or the like as a carbon coating material during reaction or baking in the production of LiFePO₄, LiMnPO₄ or Li₃V₂(PO₄)₃.

The particle sizes of LiFePO₄, LiMnPO₄ or Li₃V₂(PO₄)₃ particles are not particularly limited and those having the desired particle size may be used. Since the particle size affects stability or density of LiFePO₄, LiMnPO₄ or Li₃V₂(PO₄)₃, the D₅₀ value in the particle size distribution of secondary particles of LiFePO₄, LiMnPO₄ or Li₃V₂(PO₄)₃ is preferably 0.5 to 25 µm.

When D₅₀ is lower than 0.5 µm, contact area with the electrolytic solution increases and stability of LiFePO₄, LiMnPO₄ or Li₃V₂(PO₄)₃ may be deteriorated, and when the D₅₀ value exceeds 25 µm, power may be deteriorated due to deterioration in density. When D₅₀ falls within the range, electric storage devices with superior stability and higher power can be obtained.

In the particle size distribution of secondary particles of LiFePO₄, LiMnPO₄ or Li₃V₂(PO₄)₃, the D₅₀ value is more preferably 1 µm to 10 µm, particularly preferably 3 µm to 5 µm. Furthermore, in the particle size distribution of secondary particles, D₅₀ is a value measured using a particle size distribution meter based on a laser diffraction (light scattering) manner.

### Lithium nickel composite oxide

Various lithium nickel composite oxides may be used in the embodiments. In one embodiment, as lithium nickel composite oxide of the second active material, for example, LiNi_{0.8}Co_{0.2}O₂, LiNi_{0.8}Co_{0.1}Mn_{0.1}O₂, LiNi_{0.6}Co_{0.2}Mn_{0.2}O₂, and LiNi_{0.3}Co_{0.3}Mn_{0.4}O₂ which are lithium nickel cobalt composite oxides, are used. Here, the content of Ni element in the lithium nickel composite oxide affects proton absorption force of lithium nickel composite oxide.

In the embodiments, the Ni element inhibits elution of iron, manganese or vanadium from LiFePO₄, LiMnPO₄ or Li₃V₂(PO₄)₃ and is generally used to inhibit generation of hydrogen fluoride by fluorinated ethylene carbonate and moisture. The amount of nickel contained in the second active material is a value that satisfies the case in which x is 0.3 to 0.8 when the second active material is represented by LiNiₓCo_{y}M_{z}O₂ (in which x + y + z = 1, x > 0).

When LiNi_{0.8}Co_{0.2}O₂ or LiNi_{0.8}Co_{0.1}Mn_{0.1}O₂ is used as the second active material, the content thereof in the positive electrode is adjusted to 10 to 80 parts by mass, thereby satisfying the limited amount of nickel. When LiNi_{0.6}Co_{0.2}Mn_{0.2}O₂ is used as the second active material, the content thereof in the positive electrode is adjusted to 15 to 85 parts by mass, thereby satisfying the limited amount of nickel.

When LiNi_{0.3}Co_{0.3}Mn_{0.4}O₂ is used as the second active material, the content thereof in the positive electrode is adjusted to 50 to 85 parts by mass, thereby satisfying the limited amount of nickel.

In addition, in the lithium nickel composite oxide of the embodiments, a metal element different from Ni, having an atomic number of 11 or higher may be substituted into the Ni site. The metal element different from Ni, having an atomic number of 11 or higher, is preferably selected from transition metal elements. The transition elements may have a plurality of oxidation numbers like Ni, thus using the oxidation and reduction range in the lithium nickel composite oxide and maintaining high capacity properties. The metal element different from Ni, having an atomic number of 11 or higher, is for example Co, Mn, Al or Mg, preferably Co or Mn.

The lithium nickel composite oxide may be prepared by any method without particular limitation. For example, the lithium nickel composite oxide may be prepared by mixing a synthesized Ni-containing precursor and a lithium compound at a desired stoichiometric ratio by a solid phase reaction method, a co-precipitation method, a sol gel method or the like, followed by baking under an air atmosphere or the like.

The lithium nickel composite oxide may be commonly in the form of particles obtained by grinding the baked substance. The particle size thereof is not particularly limited and those having the desired particle size may be used. Since the particle size affects stability or density of lithium nickel composite oxide, the mean particle size of particles is preferably 0.5 to 25 µm.

When the mean particle size is lower than 0.5 µm, a contact area with the electrolytic solution increases and stability of lithium nickel composite oxide may be deteriorated. When the mean particle size exceeds 25 µm, power may be deteriorated due to deterioration in density. When the mean particle size falls within the range, electric storage devices with superior stability and higher power can be obtained.

The mean particle size of particles of lithium nickel composite oxide is more preferably 1 to 25 µm, particularly preferably 5 to 20 µm. Furthermore, the mean particle size of these particles is a value measured using a particle size distribution meter based on a laser diffraction (light scattering) manner.

### Positive electrode

The positive electrode of the embodiments may be produced using well-known materials as far as the positive electrode active materials include at least one of LiFePO₄, LiMnPO₄ and Li₃V₂(PO₄)₃ which are coated with carbon as described in the above and lithium nickel composite oxide. Specifically, production of the positive electrode will be described in detail below.

A positive electrode mixture layer is formed by a process including applying a positive electrode slurry obtained by dispersing a mixture containing the positive electrode active material, a binder, a conductive agent in a solvent to a positive electrode collector and drying the applied substance. After drying, pressing may be performed. As a result, the positive electrode mixture layer is uniformly and firmly pressed on the collector. The positive electrode mixture layer preferably has a thickness of 10 to 200 µm, preferably 20 to 100 µm.

The binder used for formation of the positive electrode mixture layer is for example a fluorine-containing resin such as polyvinylidene fluoride, an acrylic binder, a rubber-based binder such as SBR, a thermoplastic resin such as polypropylene and polyethylene, carboxymethylcellulose or the like. The binder is preferably a fluorine-containing resin or a thermoplastic resin that is chemically and electrochemically stable to non-aqueous electrolytic solution used for electric storage devices of the embodiments, particularly preferably a fluorine-containing resin.

Examples of the fluorine-containing resin include polyvinylidene fluoride as well as polytetrafluoroethylene, vinylidene fluoride-trifluoroethylene copolymers, ethylene-tetrafluoroethylene copolymers and propylene-tetrafluoroethylene copolymers and the like. The content of the binder is preferably 0.5 to 20 % by mass with respect to the positive electrode active material.

The conductive agent used for formation of the positive electrode mixture layer is for example conductive carbon such as carbon black (CB), a metal such as copper, iron, silver, nickel, palladium, gold, platinum, indium or tungsten, or conductive metal oxide such as indium oxide and tin oxide. The content of conductive material is preferably 1 to 30 % by mass with respect to the positive electrode active material.

The solvent used for the formation of the positive electrode mixture layer may be water, isopropyl alcohol, N-methyl pyrrolidone (NMP), dimethylformamide or the like.

The surface of the positive electrode collector that contacts the positive electrode mixture layer is a conductive base material having conductivity and the positive electrode collector is for example a conductive base material made of a conductive material such as metal, conductive metal oxide or conductive carbon, or a non-conductive base material coated with a conductive material.

The conductive material is preferably copper, gold, aluminum or an alloy thereof or conductive carbon. The positive electrode collector may be an expanded metal, a punched metal, a foil, a mesh, a foamed material or the like of the material. In cases of porous materials, the shape or number of through holes is not particularly limited and may be suitably determined so long as the movement of lithium ions is not inhibited.

The content of second active material, LiNi_{0.8}Co_{0.1}Mn_{0.1}O₂, is 10 to 80 parts by mass with respect to the active material of positive electrode according to one embodiment. In another embodiment, the content of the second active material, LiNi_{0.6}Co_{0.2}Mn_{0.2}O₂, is 15 to 80 parts by mass with respect to the positive electrode active material. In another embodiment, the content of the second active material, LiNi_{0.3}Co_{0.3}Mn_{0.4}O₂, is 50 to 85 parts by mass with respect to the positive electrode active material.

As a result, the amount of nickel is defined. When the content of nickel is excessively low, inhibition effects of elution of vanadium from Li₃V₂(PO₄)₃ is not sufficiently exerted and superior cycle properties cannot be obtained. In addition, high capacity cannot be obtained.

On the other hand, when the content of nickel is excessively high, elution of vanadium from Li₃V₂(PO₄)₃ can be inhibited, but charge and discharge cycle properties of electric storage devices may be not sufficiently improved. In the embodiments, the Ni element has an activity capable of inhibiting elution of vanadium from Li₃V₂(PO₄)₃ as described in the above, and at the same time, is used for inhibition of hydrogen fluoride by fluorinated ethylene carbonate and moisture.

### Negative electrode

The negative electrode of the embodiments is not particularly limited and may be prepared using a well-known material. For example, a negative electrode slurry obtained by dispersing a mixture containing a generally used negative electrode active material and a binder in a solvent is applied to a negative electrode collector, followed by drying to form a negative electrode mixture layer. Furthermore, the binder, the solvent and the collector may be the same as in the aforementioned positive electrode.

The negative electrode active material is for example a lithium-based metal material, an inter-metal compound material of a metal and a lithium metal, a lithium compound or lithium intercalation carbon material or the like.

Examples of lithium-based metal material include metal lithium and lithium alloys (for example, Li-Al alloys). The inter-metal material of the metal and the lithium metal is for example an inter-metal compound including tin, silicon or the like. The lithium compound is for example lithium nitride.

In addition, examples of the lithium intercalation carbon material include graphite, carbon-based materials such as hard carbon materials, polyacene materials and the like. The polyacene material is for example insoluble and unmeltable PAS having a polyacene skeleton. Furthermore, these lithium intercalation carbon materials are substances that are capable of reversibly doping lithium ions. The negative electrode mixture layer generally has a thickness of 10 µm to 200 µm, preferably 20 µm to 100 µm.

In addition, in the embodiments, a coating concentration of the negative electrode mixture layer is suitably designed based on a coating concentration of the positive electrode mixture layer. Commonly, the lithium ion secondary battery is designed such that capacities (mAh) of the positive electrode and the negative electrode are substantially equivalent in view of capacity balance of positive electrode and negative electrode, or energy density. Accordingly, the coating concentration of negative electrode mixture layer is determined depending on the type of negative electrode active material, capacity of positive electrode or the like.

### Non-aqueous electrolytic solution

The non-aqueous electrolytic solution of the embodiments may be used without particular limitation so long as it contains fluorinated ethylene carbonate in a mass ratio of 0.2% to 10% and may be a well-known material. For example, an electrolytic solution obtained by dissolving a general lithium salt as an electrolyte in an organic solvent may be used in that it does not cause electrolysis even at a high voltage and lithium ions can be stably present.

### Fluorinated ethylene carbonate

Examples of fluorinated ethylene carbonate (FEC) include 4-fluoro-1,3-dioxolan-2-one, 4,4-difluoroethylene carbonate, 4,5-difluoroethylene carbonate, 4,4,5-trifluoroethylene carbonate, 4,4,5,5-tetrafluoroethylene carbonate and the like.

The content of the fluorinated ethylene carbonate in the non-aqueous electrolytic solution is 0.2 % by mass to 10 % by mass. When the content is 0.2 % by mass or higher, cycle properties can be improved. When the content is 10 % by mass or higher, the fluorinated ethylene carbonate remains, thus causing deterioration due to environmental moisture and positively affecting cycle properties and the like.

Examples of the electrolyte include CF₃SO₃Li, C₄F₉SO₈Li, (CF₃SO₂)₂NLi, (CF₃SO₂)₃CLi, LiBF₄, LiPF₆, LiClO₄ and combinations thereof.

Examples of the organic solvent include propylene carbonate, ethylene carbonate, buthylene carbonate, dimethyl carbonate, diethyl carbonate, ethylmethyl carbonate, vinyl carbonate, trifluoromethyl propylene carbonate, 1,2-dimethoxyethane, 1,2-diethoxyethane, γ-butyrolactone, tetrahydrofuran, 1,3-dioxolane, 4-methyl-1,3-dioxolane, diethylether, sulfolan, methylsulfolan, acetonitrile, propionitrile and mixtures thereof.

The concentration of electrolyte in the non-aqueous electrolytic solution is preferably 0.1 to 5.0 mol/L, more preferably, 0.5 to 3.0 mol/L.

The non-aqueous electrolytic solution may be a liquid state, a solid electrolyte or a polymer gel electrolyte in which a plasticizer or polymer is incorporated.

### Separator

The separator used in the embodiments is not particularly limited and may be a well-known separator. For example, a porous material that exhibits durability to an electrolytic solution, a positive electrode active material and a negative electrode active material, has communication holes and has no electrical conductivity is preferably used.

Examples of this porous material include woven fabrics, non-woven fabrics, synthetic resin microporous membranes, glass fibers and the like. The synthetic resin microporous membrane is preferably used and a microporous membrane made of polyolefin such as polyethylene or polypropylene is particularly preferably used, in terms of thickness, membrane strength and membrane resistance.

Hereinafter, as an embodiment of non-aqueous electrolyte secondary battery, an example of lithium ion secondary battery will be described with reference to the drawings.

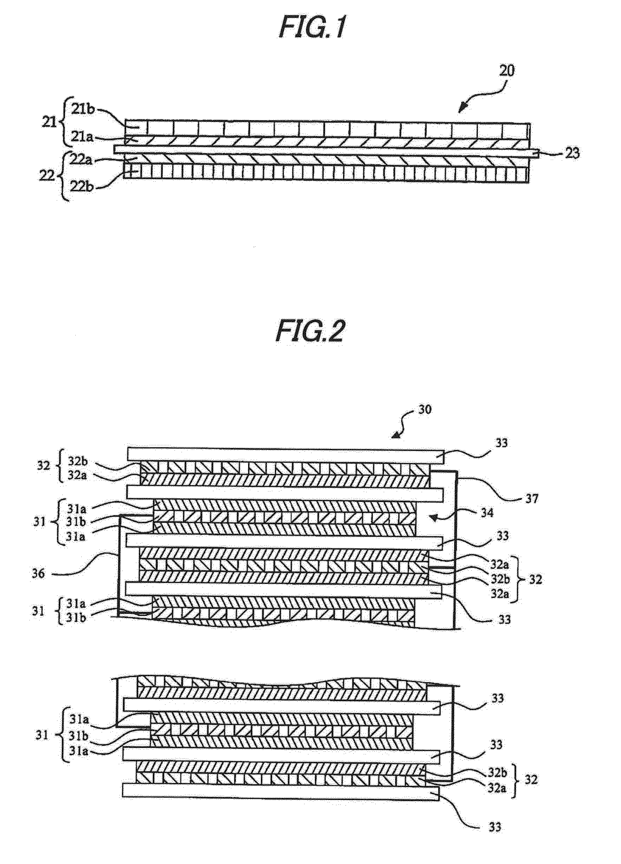

FIG. 1 is a schematic sectional view illustrating a lithium ion secondary battery according to one exemplary embodiment. As shown in FIG. 1, the lithium ion secondary battery 20 includes a positive electrode 21, a negative electrode 22, and a separator 23 interposed between the positive electrode 21 and the negative electrode 22.

The positive electrode 21 includes a positive electrode mixture layer 21 a containing a positive electrode active material of the embodiments and a positive electrode collector 21b. The positive electrode mixture layer 21 a is disposed on the side surface of the separator 23 of the positive electrode collector 21b. The negative electrode 22 includes a negative electrode mixture layer 22a and a negative electrode collector 22b. The negative electrode mixture layer 22a is disposed on the side surface of the separator 23 of the negative electrode collector 22b.

The positive electrode 21, the negative electrode 22, and the separator 23 are mounted in an exterior container (not shown) and the exterior container is filled with a non-aqueous electrolytic solution. Examples of the container include battery cans, laminate films and the like. The positive electrode collector 21b and the negative electrode collector 22b are optionally connected to leads for connections of exterior terminals (not shown).

Then, FIG. 2 is a schematic sectional view illustrating a lithium ion secondary battery according to another exemplary embodiment. As shown in FIG. 2, the lithium ion secondary battery 30 includes an electrode unit 34 in which a plurality of positive electrodes 31 and a plurality of negative electrodes 32 are alternately laminated such that the separator 33 is interposed between the positive electrode 31 and the negative electrode 32. The positive electrode 31 is provided with a positive electrode mixture layer 31 a disposed at each of both surfaces of the positive electrode collector 31b.

The negative electrode 32 is provided with a negative electrode mixture layer 32a disposed at each of both surfaces of the negative electrode collector 32b (the uppermost and the lowermost negative electrodes 32 are provided at one surface thereof with a negative electrode mixture layer 32a). In addition, the positive electrode collector 31b has a protrusion (not shown) and respective protrusions of a plurality of positive electrode collectors 31b overlap one another and a lead 36 is welded to each of the overlapping regions.

Similarly, the negative electrode collector 32b has a protrusion and a lead 37 is welded to each of the overlapping regions of respective protrusions of a plurality of negative electrode collectors 32b. The lithium ion secondary battery 30 has a structure in which an electrode unit 34 and a non-aqueous electrolytic solution are mounted in an exterior container such as a laminate film (not shown). The leads 36 and 37 are exposed to the outside of the exterior container for connection of the exterior container.

Furthermore, the lithium ion secondary battery 30 may be provided with a lithium electrode to allow lithium ions to be freely doped into a positive electrode and/or a negative electrode. In this case, movement of lithium ions is facilitated, and the positive electrode collector 31b or the negative electrode collector 32b is provided with through holes that extend in the lamination direction of the electrode unit 34.

In addition, the lithium ion secondary battery 30 has a structure in which negative electrodes are arranged in the uppermost and the lowermost parts and is not limited to the structure. The lithium ion secondary battery 30 may have a structure in which positive electrodes are arranged in the uppermost and the lowermost parts.

Hereinafter, Examples will be described.

### EXAMPLES

Examples 1 to 4 and Comparative Examples 1 to 3 are cases in which the second active material is LiNi_{0.8}Co_{0.1}Mn_{0.1}O₂.

### Example 1

### (1) Production of positive electrode

The following substances for the positive electrode mixture layer were mixed to obtain a positive electrode slurry.

| | |
|---|---|
| First active material (Li₃V₂(PO₄)₃) | 80 parts by mass |
| Second active material (LiNi_{0.8}Co_{0.1}Mn_{0.1}O₂) | 10 parts by mass |
| Binder (polyvinylidene fluoride (PVdF)) | 5 parts by mass |
| Conductive agent (carbon black) | 5 parts by mass |
| Solvent (N-methyl-2-pyrrolidone (NMP)) | 100 parts by mass |

The positive electrode slurry was applied to a positive electrode collector of an aluminum foil (thickness 30 µm), followed by drying to form a positive electrode mixture layer on the positive electrode collector. After formation of the positive electrode mixture layer, a coated region (region where the positive electrode mixture layer is formed) except an uncoated region with a size of 10 mm × 10 mm as a tab for lead connection was cut to a size of 50 mm × 50 mm. Li₃V₂(PO₄)₃ for the first active material used herein was coated with 1.4 % by mass of carbon in terms of C atom.

### (2) Production of negative electrode

The following substances for the negative electrode mixture layer were mixed to obtain a negative electrode slurry.

| | |
|---|---|
| Active material (graphite) | 95 parts by mass |
| Binder (PVdF) | 5 parts by mass |
| Solvent (NMP) | 150 parts by mass |

The negative electrode slurry was applied to a negative electrode collector of an aluminum foil (thickness 10 µm), followed by drying to form a negative electrode mixture layer on the negative electrode collector. After formation of the negative electrode mixture layer, a coated region (region where the negative electrode mixture layer is formed) except an uncoated region with a size of 10 mm × 10 mm as a tab for lead connection was cut to a size of 52 mm × 52 mm.

### (3) Electrolytic solution

The following substances for a non-aqueous electrolytic solution were mixed to obtain an electrolytic solution.

| | |
|---|---|
| Additive (fluorinated ethylene carbonate) | 3 parts by mass |
| Non-aqueous electrolytic solution | 97 parts by mass |

The non-aqueous electrolytic solution was obtained by dissolving 1 mol/L of LiPF₆ as an electrolyte in a mixed solution consisting of ethylene carbonate and dimethylcarbonate at a volume ratio of 1:2 and dissolving 3 parts by mass of fluorinated ethylene carbonate in 97 parts by mass of the resulting solution.

### (4) Fabrication of battery

A lithium ion secondary battery according to the embodiment shown in FIG. 2 was fabricated using 19 pieces of positive electrodes and 20 pieces of negative electrodes thus produced. Specifically, the positive electrodes and the negative electrodes were laminated such that a separator was interposed therebetween, and set with a tape near the laminate.

The tabs of respective positive electrode collectors were stacked and aluminum metal leads were welded. Similarly, the tabs of respective negative electrode collectors were stacked and nickel metal leads were welded.

These structures were mounted in an aluminum laminate exterior material, the positive electrode leads and the negative electrode leads were separated from the exterior material and airtight bonding was performed except an electrolytic solution mounting inlet. The electrolytic solution was injected through the electrolytic solution mounting inlet and permeated into the electrode by impregnation under vacuum, and the laminate was sealed under vacuum.

### (5) Charge and discharge test

The positive electrode leads and the negative electrode leads of batteries thus fabricated were connected to the corresponding terminals of a charge and discharge tester (manufactured by Asuka Electronics Co. Ltd.) and constant-voltage constant-current charged at a maximum voltage of 4.2 V and a current rate of 2 C and constant-current discharged at a current rate 5 C up to 2.5 V after charge. These processes were repeated 500 cycles.

An energy density (Wh/kg) was calculated from the capacity measured during the first discharge and a cycle capacity maintenance ratio (discharge capacity during 500 cycles/discharge capacity during the first cycle × 100) was calculated from the capacity after cycles. The capacity maintenance ratio was 92.1 %.

### Example 2

A battery was fabricated and tested in the same manner as in Example 1, except that the first active material was used in an amount of 10 parts by mass and the second active material was used in an amount of 80 parts by mass. The capacity maintenance ratio was 90.3 %.

### Example 3

A battery was fabricated and tested in the same manner as in Example 1, except that the first active material was used in an amount of 30 parts by mass and the second active material was used in an amount of 60 parts by mass. The capacity maintenance ratio was 95.3 %.

### Example 4

A battery was fabricated and tested in the same manner as in Example 1, except that the additive of the electrolytic solution (fluorinated ethylene carbonate) was used in an amount of 0.2 parts by mass and other non-aqueous electrolytic solution was used in an amount of 99.8 parts by mass. The capacity maintenance ratio was 92.4 %. The results of Examples 1 to 4 are shown in Table 1.

### Comparative Example 1

A battery was fabricated and tested in the same manner as in Example 1, except that the first active material was used in an amount of 85 parts by mass and the second active material was used in an amount of 5 parts by mass. The capacity maintenance ratio was 85.2 %. The cycle test results of Comparative Examples are shown in Table 2.

### Comparative Example 2

A battery was fabricated and tested in the same manner as in Example 1, except that the additive of the electrolytic solution (fluorinated ethylene carbonate) was used in an amount of 0.1 parts by mass and other non-aqueous electrolytic solution was used in an amount of 99.9 parts by mass. The capacity maintenance ratio was 88.1 %.

### Comparative Example 3

A battery was fabricated and tested in the same manner as in Example 1, except that the first active material was used in an amount of 90 parts by mass and the second active material was used in an amount of 0 part by mass. The capacity maintenance ratio was 84.8 %. The results of Comparative Examples 1 to 3 are shown in Table 2.

Examples 5 to 8 and Comparative Examples 4 to 6 were cases in which the second active material was LiNi_{0.8}Co_{0.2}O₂.

### Example 5

A battery was fabricated and tested in the same manner as in Example 1, except that LiNi_{0.8}Co_{0.2}O₂ was used as the second active material. The capacity maintenance ratio was 91.3 %.

### Example 6

A battery was fabricated and tested in the same manner as in Example 5, except that the first active material was used in an amount of 10 parts by mass and the second active material was used in an amount of 80 parts by mass. The capacity maintenance ratio was 90.6 %.

### Example 7

A battery was fabricated and tested in the same manner as in Example 5, except that the first active material was used in an amount of 30 parts by mass and the second active material was used in an amount of 60 parts by mass. The capacity maintenance ratio was 94.8 %.

### Example 8

A battery was fabricated and tested in the same manner as in Example 5, except that the additive of the electrolytic solution (fluorinated ethylene carbonate) was used in an amount of 0.2 parts by mass and other non-aqueous electrolytic solution was used in an amount of 99.8 parts by mass. The capacity maintenance ratio was 92.3 %. The results of Examples 5 to 8 are shown in Table 3.

### Comparative Example 4

A battery was fabricated and tested in the same manner as in Example 5, except that the first active material was used in an amount of 85 parts by mass and the second active material was used in an amount of 5 parts by mass. The capacity maintenance ratio was 86.2 %.

### Comparative Example 5

A battery was fabricated and tested in the same manner as in Example 5, except that the additive of the electrolytic solution (fluorinated ethylene carbonate) was used in an amount of 0.1 parts by mass and other non-aqueous electrolytic solution was used in an amount of 99.9 parts by mass. The capacity maintenance ratio was 87.9 %.

### Comparative Example 6

A battery was fabricated and tested in the same manner as in Example 5, except that the first active material was used in an amount of 90 parts by mass and the second active material was used in an amount of 0 part by mass. The capacity maintenance ratio was 85.2 %. The results of Comparative Examples 4 to 6 are shown in Table 4.

Examples 9 to 12 and Comparative Examples 7 to 8 were cases in which the second active material was LiNi_{0.6}Co_{0.2}Mn_{0.2}O₂.

### Example 9

A battery was fabricated and tested in the same manner as in Example 1, except that the first active material was used in an amount of 75 parts by mass and 15 parts by mass of LiNi_{0.6}Co_{0.2}Mn_{0.2}O₂ was used as the second active material. The capacity maintenance ratio was 91.3 %.

### Example 10

A battery was fabricated and tested in the same manner as in Example 9, except that the first active material was used in an amount of 5 parts by mass and the second active material was used in an amount of 85 parts by mass. The capacity maintenance ratio was 90.2 %.

### Example 11

A battery was fabricated and tested in the same manner as in Example 9, except that the first active material was used in an amount of 25 parts by mass and the second active material was used in an amount of 65 parts by mass. The capacity maintenance ratio was 94.1 %.

### Example 12

A battery was fabricated and tested in the same manner as in Example 9, except that the additive of the electrolytic solution (fluorinated ethylene carbonate) was used in an amount of 0.2 parts by mass and other non-aqueous electrolytic solution was used in an amount of 99.8 parts by mass. The capacity maintenance ratio was 91.6 %. The results of Examples 9 to 12 are shown in Table 5.

### Comparative Example 7

A battery was fabricated and tested in the same manner as in Example 9, except that the first active material was used in an amount of 80 parts by mass and the second active material was used in an amount of 10 parts by mass. The capacity maintenance ratio was 83.8 %.

### Comparative Example 8

A battery was fabricated and tested in the same manner as in Example 9, except that the additive of the electrolytic solution (fluorinated ethylene carbonate) was used in an amount of 0.1 parts by mass and other non-aqueous electrolytic solution was used in an amount of 99.9 parts by mass. The capacity maintenance ratio was 86.4 %. The results of Comparative Examples 7 to 8 are shown in Table 6.

Examples 13 to 15 and Comparative Examples 9 to 10 were cases in which the second active material was LiNi_{0.3}Co_{0.3}Mn_{0.4}O₂.

### Example 13

A battery was fabricated and tested in the same manner as in Example 1, except that the first active material was used in an amount of 40 parts by mass and 40 parts by mass of LiNi_{0.3}Co_{0.3}Mn_{0.4}O₂ was used as the second active material. The capacity maintenance ratio was 90.6 %.

### Example 14

A battery was fabricated and tested in the same manner as in Example 13, except that the first active material was used in an amount of 5 parts by mass and the second active material was used in an amount of 85 parts by mass. The capacity maintenance ratio was 90.0 %.

### Example 15

A battery was fabricated and tested in the same manner as in Example 13, except that the additive of the electrolytic solution (fluorinated ethylene carbonate) was used in an amount of 0.2 parts by mass and other non-aqueous electrolytic solution was used in an amount of 99.8 parts by mass. The capacity maintenance ratio was 90.8 %. The results of Comparative Examples 13 to 15 are shown in Table 7.

### Comparative Example 9

A battery was fabricated and tested in the same manner as in Example 13, except that the first active material was used in an amount of 60 parts by mass and the second active material was used in an amount of 30 parts by mass. The capacity maintenance ratio was 82.1 %.

### Comparative Example 10

A battery was fabricated in the same manner as in Example 13 and tested, except that the additive of the electrolytic solution (fluorinated ethylene carbonate) was used in an amount of 0.1 parts by mass and other non-aqueous electrolytic solution was used in an amount of 99.9 parts by mass. The capacity maintenance ratio was 84.9 %. The results of Comparative Examples 9 to 10 are shown in Table 8.

**Table1**

| | | | Example 1 | Example 2 | Example 3 | Example 4 |
|---|---|---|---|---|---|---|
| Positive Electrode | First active material | Li₃V₂(PO₄)₃ | 80 parts by mass | 10 parts by mass | 30 parts by mass | 80 parts by mass |
| | Second active material | LiNi_{0.8}Co_{0.1} Mn_{0.1}O₂ | 10 parts by mass | 80 parts by mass | 60 parts by mass | 10 parts by mass |
| | Conductive agent | CB | 5 parts by mass | 5 parts by mass | 5 parts by mass | 5 parts by mass |
| | binder | PVdF | 5 parts by mass | 5 parts by mass | 5 parts by mass | 5 parts by mass |
| | electrode size | mm | 50 X 50 | 50 X 50 | 50 X 50 | 50 X 50 |
| Electrolytic Solution | additive | FEC | 3 parts by mass | 3 parts by mass | 3 parts by mass | 0.2 parts by mass |
| | Other non-aqueous electrolytic solution | | 97 parts by mass | 97 parts by mass | 97 parts by mass | 99.8 parts by mass |
| Negative Electrode | Active material | graphite | 95 parts by mass | 95 parts by mass | 95 parts by mass | 95 parts by mass |
| | Binder | PVdF | 5 parts by mass | 5 parts by mass | 5 parts by mass | 5 parts by mass |
| | Electrode size | mm | 52 X 52 | 52 X 52 | 52 X 52 | 52 X 52 |
| Cycle test (after 500 cycles) | | | 92.1 % | 90.3 % | 95.3 % | 92.4 % |

**Table 2**

| | | | Comparative Example 1 | Comparative Example 2 | Comparative Example 3 |
|---|---|---|---|---|---|
| Positive electrode | First active material | Li₃V₂(PO₄)₃ | 85 parts by mass | 80 parts by mass | 90 parts by mass |
| | Second active material | LiNi_{0.8}Co_{0.1}Mn_{0.1}O₂ | 5 parts by mass | 10 parts by mass | 0 part by mass |
| | Conductive agent | CB | 5 parts by mass | 5 parts by mass | 5 parts by mass |
| | Binder | PVdF | 5 parts by mass | 5 parts by mass | 5 parts by mass |
| | Electrode size | mm | 50 X 50 | 50 X 50 | 50 X 50 |
| Electrolytic solution | Additive | FEC | 3 parts by mass | 0.1 parts by mass | 0 part by mass |
| | Other non-aqueous electrolytic solution | | 97 parts by mass | 99.9 parts by mass | 100 parts by mass |
| Negative Electrode | Active material | Graphite | 95 parts by mass | 95 parts by mass | 95 parts by mass |
| | Binder | PVdF | 5 parts by mass | 5 parts by mass | 5 parts by mass |
| | Electrode size | mm | 52 X 52 | 52 X 52 | 52 X 52 |
| Cycle test (after 500 cycles) | | | 85.2 % | 88.1 % | 84.8 % |

**Table 3**

| | | | Example 5 | Example 6 | Example 7 | Example 8 |
|---|---|---|---|---|---|---|
| Positive Electrode | First active material | Li₃V₂(PO₄)₃ | 80 parts by mass | 10 parts by mass | 30 parts by mass | 80 parts by mass |
| | Second active material | LiNi_{0.8}Co_{0.2}O₂ | 10 parts by mass | 80 parts by mass | 60 parts by mass | 10 parts by mass |
| | Conductive agent | CB | 5 parts by mass | 5 parts by mass | 5 parts by mass | 5 parts by mass |
| | Binder | PVdF | 5 parts by mass | 5 parts by mass | 5 parts by mass | 5 parts by mass |
| | Electrode size | mm | 50 X 50 | 5 X 0 | 50 X 50 | 50 X 50 |
| Electrolytic solution | Additive | FEC | 3 parts by mass | 3 parts by mass | 3 parts by mass | 0.2 parts by mass |
| | Other non-aqueous electrolytic solution | | 97 parts by mass | 97 parts by mass | 97 parts by mass | 99.8 parts by mass |
| Negative Electrode | Active material | graphite | 95 parts by mass | 95 parts by mass | 95 parts by mass | 95 parts by mass |
| | Binder | PVdF | 5 parts by mass | 5 parts by mass | 5 parts by mass | 5 parts by mass |
| | Electrode size | mm | 52 X 52 | 52 X 52 | 52 X 52 | 52 X 52 |
| Cycle test (after 500 cycles) | | | 91.3 % | 90.6% | 94.8% | 92.3 % |

**Table 4**

| | | | Comparative Example 4 | Comparative Example 5 | Comparative Example 6 |
|---|---|---|---|---|---|
| Positive Electrode | First active material | Li₃V₂(PO₄)₃ | 85 parts by mass | 80 parts by mass | 90 parts by mass |
| | Second active material | LiNi_{0.8}Co_{0.3}O₂ | 5 parts by mass | 10 parts by mass | 0 part by mass |
| | Conductive agent | CB | 5 parts by mass | 5 parts by mass | 5 parts by mass |
| | Binder | PVdF | 5 parts by mass | 5 parts by mass | 5 parts by mass |
| | Electrode size | mm | 50 X 50 | 50 X 50 | 50X50 |
| Electrolytic Solution | Additive | FEC | 3 parts by mass | 0.1 parts by mass | 0 part by mass |
| | Other non-aqueous electrolytic solution | | 97 parts by mass | 99.9 parts by mass | 100 parts by mass |
| Negative Electrode | Active material | graphite | 95 parts by mass | 95 parts by mass | 95 parts by mass |
| | Binder | PVdF | 5 parts by mass | 5 parts by mass | 5 parts by mass |
| | Electrode size | mm | 52 X 52 | 52 X 52 | 52X52 |
| Cycle test (after 500 cycles) | | | 86.2 % | 87.9% | 85.2 % |

**Table 5**

| | | | Example 9 | Example 10 | Example 11 | Example 12 |
|---|---|---|---|---|---|---|
| Positive Electrode | First active material | Li₃V₂(PO₄)₃ | 75 parts by mass | 5 parts by mass | 25 parts by mass | 75 parts by mass |
| | Second active material | LiNi_{0.6}Co_{0.2} Mn_{0.2}O₂ | 15 parts by mass | 85 parts by mass | 65 parts by mass | 15 parts by mass |
| | Conductive agent | CB | 5 parts by mass | 5 parts by mass | 5 parts by mass | 5 parts by mass |
| | Binder | PVdF | 5 parts by mass | 5 parts by mass | 5 parts by mass | 5 parts by mass |
| | Electrode size | mm | 50 X 50 | 50 X 50 | 50 X 50 | 50 X 50 |
| Electrolytic Solution | Additive | FEC | 3 parts by mass | 3 parts by mass | 3 parts by mass | 0.2 parts by mass |
| | Other non-aqueous electrolytic solution | | 97 parts by mass | 97 parts by mass | 97 parts by mass | 99.8 parts by mass |
| negative electrode | Active material | Graphite | 95 parts by mass | 95 parts by mass | 95 parts by mass | 95 parts by mass |
| | Binder | PVdF | 5 parts by mass | 5 parts by mass | 5 parts by mass | 5 parts by mass |
| | Electrode size | mm | 52 X 52 | 52 X 52 | 52 X 52 | 52 X 52 |
| Cycle test(after 500 cycles) | | | 91.3 % | 90.2 % | 94.1 % | 91.6 % |

**Table 6**

| | | | Comparative Example 7 | Comparative Example 8 |
|---|---|---|---|---|
| Positive Electrode | First active material | Li₃V₂(PO₄)₃ | 80 parts by mass | 75 parts by mass |
| | Second active material | LiNi_{0.6}Co_{0.2}Mn_{0.2} O₂ | 10 parts by mass | 15 parts by mass |
| | Conductive agent | CB | 5 parts by mass | 5 parts by mass |
| | Binder | PVdF | 5 parts by mass | 5 parts by mass |
| | Electrode size | mm | 50 X 50 | 50 X 50 |
| Electrolytic Solution | Additive | FEC | 3 parts by mass | 0.1 parts by mass |
| | Other non-aqueous electrolytic solution | | 97 parts by mass | 99.9 parts by mass |
| Negative Electrode | Active material | graphite | 95 parts by mass | 95 parts by mass |
| | Binder | PVdF | 5 parts by mass | 5 parts by mass |
| | Electrode size | mm | 52 X 52 | 52 X 52 |
| Cycle test (after 500 cycles) | | | 83.8 % | 86.4 % |

**Table 7**

| | | | Example 13 | Example 14 | Example 15 |
|---|---|---|---|---|---|
| Positive Electrode | First active material | Li₃V₂(PO₄)₃ | 40 parts by mass | 5 parts by mass | 40 parts by mass |
| | Second active material | LiNi_{0.3}Co_{0.3} Mn_{0.4}O₂ | 50 parts by mass | 85 parts by mass | 50 parts by mass |
| | Conductive agent | CB | 5 parts by mass | 5 parts by mass | 5 parts by mass |
| | Binder | PVdF | 5 parts by mass | 5 parts by mass | 5 parts by mass |
| | Electrode size | mm | 50 X 50 | 50 X 50 | 50 X 50 |
| Electrolytic Solution | Additive | FEC | 3 parts by mass | 3 parts by mass | 0.2 parts by mass |
| | Other non-aqueous electrolytic solution | | 97 parts by mass | 97 parts by mass | 99.8 parts by mass |
| Negative Electrode | Active material | graphite | 95 parts by mass | 95 parts by mass | 95 parts by mass |
| | Binder | PVdF | 5 parts by mass | 5 parts by mass | 5 parts by mass |
| | Electrode size | mm | 52 X 52 | 52 X 52 | 52 X 52 |
| Cycle test(after 500 cycles) | | | 90.6% | 90.0 % | 90.8% |

**Table 8**

| | | | Comparative Example 9 | Comparative Example 10 |
|---|---|---|---|---|
| Positive Electrode | First active material | Li₃V₂(PO₄)₃ | 60 parts by mass | 40 parts by mass |
| | Second active material | LiNi_{0.3}Co_{0.3}Mn_{0. 4} O₂ | 30 parts by mass | 50 parts by mass |
| | Conductive agent | CB | 5 parts by mass | 5 parts by mass |
| | Binder | PVdF | 5 parts by mass | 5 parts by mass |
| | Electrode size | mm | 50 X 50 | 50 X 50 |
| Electrolyti c Solution | Additive | FEC | 3 parts by mass | 0.1 parts by mass |
| | Other non-aqueous electrolytic solution | | 97 parts by mass | 99.9 parts by mass |
| Negative Electrode | Active material | graphite | 95 parts by mass | 95 parts by mass |
| | Binder | PVdF | 5 parts by mass | 5 parts by mass |
| | Electrode size | mm | 52 X 52 | 52 X 52 |
| Cycle test (after 500 cycles) | | | 82.1 % | 84.9 % |

As can be seen from the test results of Examples 1 to 15, when the content of LiNi_{0.8}Co_{0.1}Mn_{0.1}O₂ which was the second active material of the positive electrode active material was 10 to 80 parts by mass (the content of LiNi_{0.6}Co_{0.2}Mn_{0.2}O₂ was 15 to 85 parts by mass, and the content of LiNi_{0.3}Co_{0.3}Mn_{0.4}O₂ was 50 to 85 parts by mass), good results from cycle tests could be obtained by adjusting the ratio of fluorinated ethylene carbonate (FEC) in the electrolytic solution to 0.2 % by mass or higher. In the cycle test, about 90 % or higher was considered to be good.

In particular, as shown in Example 3, when the content of LiNi_{0.8}Co_{0.1}Mn_{0.1}O₂ was 30 parts by mass and the content of fluorinated ethylene carbonate was 3 % by mass, particular good results could be obtained. As shown in Comparative Examples 3 and 6, cells having no second active material or fluorinated ethylene carbonate could not exhibit good results. The reason for this was that moisture adsorption caused by coating of the positive electrode active material with conductive carbon was not inhibited due to absence of the fluorinated ethylene carbonate.

As shown in Comparative Examples 1, 4, 7 and 9, although fluorinated ethylene carbonate was present in a defined amount of parts by mass, unless the second active material was present in a defined amount of parts by mass, generation of hydrogen fluoride by fluorinated ethylene carbonate and moisture could not be inhibited and good results could not be thus obtained. That is, the amount of nickel contained in the second active material is important and should be 0.3 moles or more with respect to one mole of Li atom.

Furthermore, although neither test data in which fluorinated ethylene carbonate exceeds 10 % by mass nor test data in which the second active material exceeds the defined amount of parts by mass were disclosed, all of these cases exhibited slightly deteriorated results in the cycle test, as compared to Examples. It is thought that the reason for the former is that, as described above, excess fluorinated ethylene carbonate was present in the cell and the reason for the latter is that excessive nickel affected electric properties of the cell.

Furthermore, the present invention is not limited to the construction of aforementioned embodiments and Examples, but various modifications are possible within the scope of the subject matters of the invention.

In accordance with the above embodiments and examples, a non-aqueous electrolyte secondary battery may include: a first active material of a positive electrode including at least one of carbon-coated LiFePO₄, LiMnPO₄ and Li₃V₂(PO₄)₃; a second active material of the positive electrode including lithium nickel composite oxide; and an electrolytic solution including fluorinated ethylene carbonate. Furthermore, Fe, Mn and V in these formulas may be partially substituted by other element (M).

For example, when the metal is Fe, then Fe may be partially substituted by another element (M), as represented by Fe_{1-X}Mₓ. When the metal is Mn, then Mn may be partially substituted by another element (M), as represented by Mn₁₋ₓMₓ. When the metal is V, then V may be partially substituted by another element (M), as represented by V_{2-y}M_{y}. (M) is a metal element and is preferably a transition metal oxide.

Further, in the above embodiments, the formulae of LiFePO₄, LiMnPO₄ and Li₃V₂(PO₄)₃ express crystal structures and basic constituent elements of chemical compounds to be represented by the formulae. Thus, a chemical compound in which a site of Fe, Mn or V is substituted by a different element (having an atomic number of 11 or more) can also be represented by any of the formulae of LiFePO₄, LiMnPO₄ and Li₃V₂(PO₄)₃.

According to the embodiments and examples, a first active material for a positive electrode contains a carbon-coated polyanionic active material, a second active material for the positive electrode contains lithium nickel composite oxide, and an electrolytic solution contains fluorinated ethylene carbonate. As a result, generation of hydrogen fluoride caused by reaction of fluorinated ethylene carbonate with moisture is inhibited by lithium nickel composite oxide used as the second active material.

Accordingly, generation of hydrogen fluoride by reaction of fluorinated ethylene carbonate with moisture which has been not solved to date is inhibited and deterioration in cell characteristics is prevented. The absence of deterioration is confirmed by charge/discharge cycle tests.

Furthermore, the non-aqueous electrolyte secondary battery uses carbon-coated polyanion as the first active material for the positive electrode and lithium nickel composite oxide as the second active material of the positive electrode and exhibits high power and superior safety as well as high capacity by mixing a predetermined amount of lithium nickel composite oxide with the positive electrode active material.

### List of Reference Signs

- 20: = secondary battery
- 21: = positive electrode
- 21 a: = positive electrode mixture layer
- 21b: = positive electrode collector
- 22: = negative electrode
- 22a: = negative electrode mixture layer
- 22b: = negative electrode collector
- 23: = separator
- 30: = secondary battery
- 31: = positive electrodes
- 31a: = positive electrode mixture layer
- 31b: = positive electrode collector
- 32: = negative electrodes
- 32a: = negative electrode mixture layer
- 32b: = negative electrode collector
- 33: = separator
- 34: = electrode unit
- 36: = lead
- 37: = lead

## Claims

1. A non-aqueous electrolyte secondary battery comprising:
- a first active material of a positive electrode including a chemical compound represented by a formula of LiFePO₄, LiMnPO₄ or Li₃V₂(PO₄)₃ or a chemical compound in which a part of a site of Fe, Mn or V in the formula of LiFePO₄, LiMnPO₄ or Li₃V₂(PO₄)₃ is substituted by a different metallic element having an atomic number of 11 or more, wherein the chemical compound is coated with a conductive carbon;
- a second active material of the positive electrode including lithium nickel composite oxide; and
- an electrolytic solution including fluorinated ethylene carbonate, wherein the amount of nickel contained in the second active material is 0.3 to 0.8 mol with respect to one mol of a Li atom, and wherein the content of the fluorinated ethylene carbonate in the electrolytic solution is 0.2 % by mass to 10 % by mass.

2. The secondary battery according to claim 1,
wherein the second active material comprises lithium nickel cobalt composite oxide.

3. The secondary battery according to claim 1 or 2,
wherein the second active material comprises LiNi_{0.8}Co_{0.1}Mn_{0.1}O₂ and the content of LiNi_{0.8}Co_{0.1}Mn_{0.1}O₂ in the positive electrode is 10 to 80 parts by mass.

4. The secondary battery according to claim 1 or 2,
wherein the second active material comprises LiNi_{0.6}Co_{0.2}Mn_{0.2}O₂ and the content of LiNi_{0.6}Co_{0.2}Mn_{0.2}O₂ in the positive electrode is 15 to 85 parts by mass.

5. The secondary battery according to claim 1 or 2,
wherein the second active material comprises LiNi_{0.3}Co_{0.3}Mn_{0.4}O₂ and the content of LiNi_{0.3}Co_{0.3}Mn_{0.4}O₂ in the positive electrode is 50 to 85 parts by mass.

## Patentansprüche

1. Sekundärbatterie mit nichtwässrigem Elektrolyt,
die Folgendes aufweist:
- ein erstes aktives Material einer positiven Elektrode, das eine chemische Verbindung der Formel LiFePO₄, LiMnPO₄ oder Li₃V₂(PO₄)₃ oder eine chemische Verbindung aufweist, bei der ein Teil des Platzes von Fe, Mn oder V in der Formel LiFePO₄, LiMnPO₄ oder Li₃V₂(PO₄)₃ durch ein anderes metallisches Element ersetzt ist, das eine Atomzahl von 11 oder mehr aufweist, wobei die chemische Verbindung mit leitfähigem Kohlenstoff beschichtet ist;
- ein zweites aktives Material der positiven Elektrode, das ein Lithium-Nickel-Mischoxid aufweist; und
- eine Elektrolytlösung, die fluoriertes Ethylencarbonat aufweist,
wobei die im zweiten aktiven Material enthaltene, auf 1 Mol Li-Atom bezogene Nickelmenge 0,3 bis 0,8 Mol beträgt und wobei der Gehalt an fluoriertem Ethylencarbonat in der Elektrolytlösung 0,2 bis 10 Massen-% beträgt.

2. Sekundärbatterie nach Anspruch 1,
wobei das zweite aktive Material ein Lithium-Nickel-Cobalt-Mischoxid aufweist.

3. Sekundärbatterie nach Anspruch 1 oder 2,
wobei das zweite aktive Material LiNi_{0,8}Co_{0,1}Mn_{0,1}O₂ aufweist und der Gehalt an LiNi_{0,8}Co_{0,1}Mn_{0,1}O₂ in der positiven Elektrode 10 bis 80 Massen-Teile beträgt.

4. Sekundärbatterie nach Anspruch 1 oder 2,
wobei das zweite aktive Material LiNi_{0,6}Co_{0,2}Mn_{0,2}O₂ aufweist und der Gehalt an LiNi_{0,8}Co_{0,2}Mn_{0,2}O₂ in der positiven Elektrode 15 bis 85 Massen-Teile beträgt.

5. Sekundärbatterie nach Anspruch 1 oder 2,
wobei das zweite aktive Material LiNi_{0,3}Co_{0,3}Mn_{0,4}O₂ aufweist und der Gehalt an LiNi_{0,3}Co_{0,3}Mn_{0,4}O₂ in der positiven Elektrode 50 bis 85 Massen-Teile beträgt.

## Revendications

1. Batterie secondaire avec un électrolyte non-aqueux comprenant :
- un premier matériau actif d'une électrode positive incluant un composé chimique représenté par une formule de LiFePO₄, LiMnP04 ou Li₃V₂(PO₄)₃ ou un composé chimique dans lequel une part d'un lieu de Fe, Mn ou V dans la formule de LiFePO₄, LiMnPO₄ ou Li₃V₂(PO₄)₃ est substituée par un élément métallique différent ayant un nombre atomique de 11 ou plus élevé, dans lequel le composé chimique est revêtu avec un carbone conducteur ;
- un deuxième matériau actif de l'électrode positive incluant de l'oxyde composite de lithium-nickel ; et
- une solution électrolytique incluant du carbonate d'éthylène fluoré, dans lequel la quantité de nickel contenue dans le deuxième matériau actif est 0,3 à 0,8 mole en relation à une mole d'un atome de Li, et dans lequel le taux du carbonate d'éthylène fluoré dans la solution électrolytique est 0,2 % en masse à 10 % en masse.

2. Batterie secondaire selon la revendication 1,
dans laquelle le deuxième matériau actif comprend l'oxyde composite de lithium-nickel-cobalt.

3. Batterie secondaire selon la revendication 1 ou 2,
dans laquelle le deuxième matériau actif comprend LiNi_{0,8}Co_{0,1}Mn_{0,1}O₂ et le taux de LiNi_{0,8}Co_{0,1}Mn_{0,1}O₂ dans l'électrode positive est 10 à 80 parties en masse.

4. Batterie secondaire selon la revendication 1 ou 2,
dans laquelle le deuxième matériau actif comprend LiNi_{0,6}Co_{0,2}Mn_{0,2}O₂ et le taux de LiNi_{0,6}Co_{0,2}Mn_{0,2}O₂ dans l'électrode positive est 15 à 85 parties en masse.

5. Batterie secondaire selon la revendication 1 ou 2,
dans laquelle le deuxième matériau actif comprend LiNi_{0,3}Co_{0,3}Mn_{0,4}O₂ et le taux de LiNi_{0,3}Co_{0,3}Mn_{0,4}O₂ dans l'électrode positive est 50 à 85 parties en masse.
